# EUROPEAN PATENT APPLICATION

(11) **EP 3 051 270 A1**
(43) Date of publication of application: **03.08.2016**
(21) Application number: 14849791.0
(22) Date of filing: 19.09.2014
(51) Int. Cl.: G01N 21/01, G01N 21/3504, H05B 3/10, H05B 3/46

(54) **INFRARED RADIATION ELEMENT AND PRODUCTION METHOD FOR SAME**

(30) Priority: 26.09.2013 JP 2013199512; 26.09.2013 JP 2013199513
(71) Applicant: Panasonic Intellectual Property Management Co., Ltd., Osaka-shi, Osaka 540-6207 (JP)
(72) Inventor: MATSUNAMI, Hirotaka, OSAKA 540-6207 (JP); WATABE, Yoshifumi, OSAKA 540-6207 (JP); TSUJI, Koji, OSAKA 540-6207 (JP); NAGATANI, Yoshiharu, OSAKA 540-6207 (JP)
(74) Representative: Müller-Boré & Partner Patentanwälte PartG mbB
(86) International application number: PCT/JP2014/004819
(87) International publication number: WO 2015/045343

(57) **Abstract**

Infrared radiation device and production method, capable of preventing electrode degradation by heat are provided. Infrared radiation device (1) includes substrate (11), insulation layer (12), heat generating layer (13), electrode (15), foundation portion (17) and electric conductor (16). Substrate (11) has cavity (110) exposing part of back surface of insulation layer (12). Foundation portion (17) exists on inside and outside of vertical projection area (projection direction of which is along thickness direction of insulation layer (12)) of opening edge, on surface of substrate (11), of cavity (110). Electric conductor (16) is provided on surface of foundation portion (17). End of heat generating layer (13) is provided as covering (18) covering electric conductor (16). Electrode (15) is in contact with surface of covering (18) outside vertical projection area. Conductor (16) has higher melting point than that of electrode (15) and smaller electrical resistance than those of portion (17) and layer (13).

## Description

### Technical Field

The invention relates to infrared radiation devices and production methods therefor and, more particularly, to an infrared radiation device configured to radiate infrared, and a production method therefor.

### Background Art

In order to radiate infrared to measure indoor concentration of carbon dioxide a conventional infrared radiation device is configured to raise the temperature of a radiation layer thereof, thereby radiating infrared from the radiation layer.

Such an infrared radiation device has a configuration with a substrate, an insulation layer provided on a surface of the substrate, and a heat generating layer provided on a surface of the insulation layer. As documents disclosing a configuration similar to the above configuration, there are JP Pub. No. 2012-225829 (hereinafter referred to as "Document 1") and JP Pub. No. 2006-71601 (hereinafter referred to as "Document 2").

### Summary of Invention

### Technical Problem

The infrared radiation devices shown by the above prior arts are provided, on respective substrate sides of the insulation layers, with respective through-holes pierced in the substrates, thereby suppressing heat radiation from heat generating layers thereof. As a result, the heat generating layers are to heat up to a prescribed temperature for a short time, thereby radiating infrared. That is, the infrared radiation devices shown by the above prior arts are provided with the through-holes formed in the substrates on opposite sides of the insulation layers from the heat generating layers, thereby suppressing heat radiation from the heat generating layers.

In such a configuration, there is a problem of thermal degradation in electrodes connected to a heat generating layer. Specifically, when an infrared radiation device has the same configuration as that of an infrared light source described in Document 2, electrodes connected to a heat generating layer thereof are above a through-hole of a substrate. Accordingly, suppressing heat radiation from the electrodes may cause thermal degradation in the electrodes.

An object of the present invention is to provide an infrared radiation device and a production method therefor, capable of preventing electrode degradation by heat.

### Solution to Problem

An infrared radiation device according to the invention includes a substrate, an insulation layer provided on a surface of the substrate, a heat generating layer provided on a side of a surface of the insulation layer, an electrode, a foundation portion and an electric conductor. The substrate is formed with a cavity that exposes part of a back surface of the insulation layer that is on an opposite side to the surface of the insulation layer. The insulation layer is electrically insulative. The foundation portion exists on both inside and outside of a vertical projection area of an opening edge, on the surface of the substrate, of the cavity. A projection direction of the vertical projection area is along a thickness direction of the insulation layer. The electric conductor is provided on a surface of the foundation portion. An end of the heat generating layer is provided as a covering that covers the electric conductor. The electrode is in contact with a surface of the covering on the outside of the vertical projection area. The electric conductor is formed of electrically conducting material having a higher melting point than that of the electrode and has a smaller electrical resistance than those of the foundation portion and the heat generating layer.

A production method for the infrared radiation device, according to the invention includes: forming the insulation layer on the side of the surface of the substrate; forming the shape stabilizing layer on the surface of the insulation layer; forming a first tantalum nitride layer to be formed into the foundation portion on a surface of the shape stabilizing layer; forming a tantalum layer to be formed into the electric conductor on the first tantalum nitride layer; forming the foundation portion and the electric conductor by patterning a laminated film of the first tantalum nitride layer and the tantalum layer; forming a second tantalum nitride layer to be formed into the heat generating layer on a side of the surface of the shape stabilizing layer; forming the heat generating layer by patterning the second tantalum nitride layer; forming the electrode; and forming the cavity.

With the infrared radiation device according to the invention, it is possible to prevent electrode degradation by heat.

With the production method for the infrared radiation device according to the invention, it is possible to provide the infrared radiation device capable of preventing electrode degradation by heat.

### Brief Description of Drawings

FIG. 1 is a sectional view of an infrared radiation device in accordance with an embodiment of the invention;
FIG. 2 is a top view of the infrared radiation device in accordance with the embodiment of the invention;
FIG. 3 is a top view of another example of the infrared radiation device in accordance with the embodiment of the invention;
FIG. 4 is a sectional view taken along an X-X line in FIG. 3;
FIG. 5 is a schematic view illustrating an example of temperature distribution of the infrared radiation device in operation;
FIGS. 6A-6D are explanatory diagrams of a production method for the infrared radiation device in the embodiment;
FIGS. 7A-7C are explanatory diagrams of the production method for the infrared radiation device in the embodiment;
FIG. 8 is an explanatory diagram of the production method for the infrared radiation device in the embodiment;
FIGS. 9A and 9B are schematic diagrams for explanation of internal stress of the infrared radiation device in accordance with the embodiment of the invention;
FIGS. 10A and 10B are schematic diagrams for explanation of a laminated structure formed of thin films having different thermal expansion coefficients;
FIGS. 11A and 11B are schematic diagrams for explanation of thin films having different thermal expansion coefficients;
FIG. 12 is a perspective view of a light source in accordance with the embodiment of the invention;
FIG. 13 is an exploded perspective view of the light source in accordance with the embodiment of the invention; and
FIG. 14 is a sectional view of an infrared sensor in accordance with the embodiment of the invention.

### Description of Embodiments

An embodiment of the invention will be hereinafter explained with reference to the drawings.

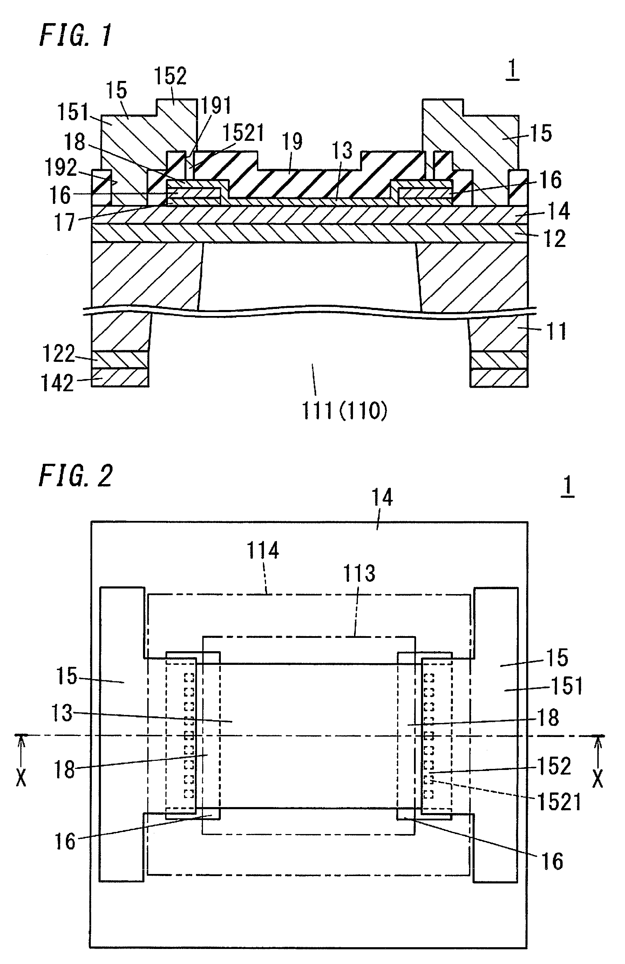

As shown in FIGS. 1 and 2, an infrared radiation device 1 in the embodiment includes a substrate 11, an insulation layer 12, a heat generating layer 13 and a shape stabilizing layer 14.

The substrate 11 is made of silicon (Si) shaped like a plate. Specifically, the substrate 11 is formed of a monocrystalline silicon substrate. The infrared radiation device 1 is formed with the insulation layer 12 on a side of a surface of the plate-like substrate 11. In the embodiment, the substrate 11 is in the shape of a square plate of which each side and a thickness are 3 mm and 500 µm, respectively. In the specification, note that hereinafter a side of the insulation layer 12 as seen from the substrate 11 is called an upper side and an opposite side to the insulation layer 12 is called a lower side. In the specification, upper and lower directions along a thickness direction of the plate-shaped substrate 11 are called upward and downward directions, respectively. FIG. 1 is a sectional view taken along an X-X line in FIG. 2.

Hereinafter, one surface, on a side of the insulation layer 12, of surfaces of the plate-shaped substrate 11 is called a "surface" or a "top face", while another surface thereof is called a "back surface" or a "bottom face". Preferably the surface of the substrate 11 is (100) plane of a monocrystalline silicon substrate.

In the specification, a size of a surface perpendicular to the thickness direction of the substrate 11 is called a plane size. With the definitions, FIG. 1 is a sectional view in the thickness direction of the infrared radiation device 1 in the embodiment, and FIG. 2 is a top view of the infrared radiation device 1 in the embodiment as seen from above. In the embodiment, upper, lower, left and right sides with respect to the plane of FIG. 2 are called back, front, left and right, respectively.

The substrate 11 has a through-hole 111 that is pierced in the substrate in the thickness direction. The through-hole 111 is in the shape of a rectangle in planar view. The through-hole 111 has a cross section (an opening) that is in the shape of a rectangle in section perpendicular to the thickness direction of the substrate 11. The rectangle shape means a right-angled quadrilateral shape and includes an oblong shape and a square shape. The rectangle means a right-angled quadrilateral and includes an oblong and a square. In the embodiment, the through-hole 111 is in the shape of a square in planar view. In the embodiment, the opening of the through-hole 111 becomes gradually smaller upwards, while the opening becomes gradually larger downwards. That is, an inside of the through-hole 111 is in the shape of a reversed taper such that it becomes gradually larger downwards. The opening becoming smaller means an area of the opening becoming smaller. The opening becoming larger means the area of the opening becoming larger. Therefore, an area of the opening of the through-hole 111 on the back surface of the substrate 11 is larger than that of the opening on the surface of the substrate 11. The through-hole 111 is formed so that the area of the opening becomes gradually larger as it is further apart from the insulation layer 12 in the thickness direction of the substrate 11.

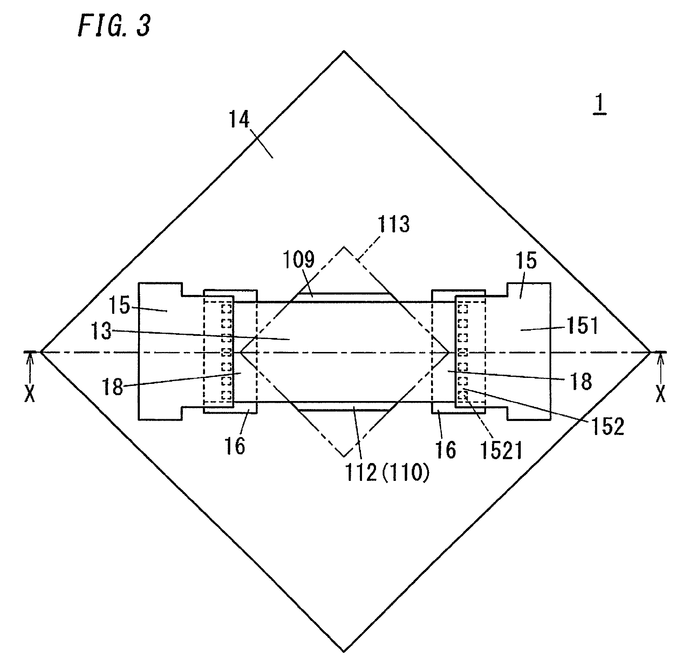

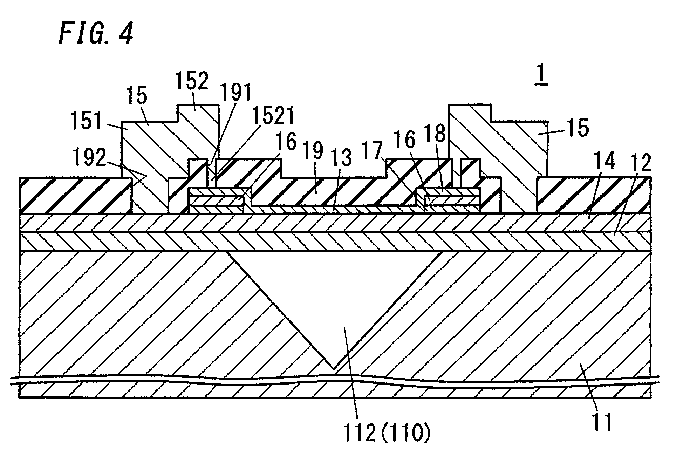

In the embodiment, the substrate 11 has the through-hole 111, but may be provided on the side of the surface of the substrate 11 with recess 112 having an opening on the upper side in place of the through-hole 111 as shown in FIGS. 3 and 4. That is, in the embodiment, the substrate 11 has the through-hole 111, but it is desirable that part of a back surface of the insulation layer 12 not be in contact with the substrate 11 but be exposed to an air layer. In the case where the recess 112 is provided as shown in FIG. 3, a slit 109 is formed so that it is pierced in a laminated structure of the insulation layer 12, the shape stabilizing layer 14 and a protective layer 19 in a thickness direction of the laminated structure. The substrate 11 can be therefore etched from the surface thereof through the slit 109 in the manufacture.

The insulation layer 12 is formed of a silicon oxide film. In short, the insulation layer 12 is made of silicon oxide. Preferably the silicon oxide is SiO₂. Preferably the silicon oxide film is a SiO₂ film. The insulation layer 12 is formed on the substrate 11 so that it closes the opening of the through-hole 111 on the upper side and on the side of the surface of the substrate 11. That is, the insulation layer 12 has a larger plane size than that of the through-hole 111. The insulation layer 12 is a bottom layer of a configuration on the through-hole 111 and supports a configuration on the insulation layer 12. In the embodiment, the insulation layer 12 is a thin film having a size that is almost the same as a plane size of the substrate 11. The insulation layer 12 has a thickness of 0.2 µm and is extremely thinner than the substrate 11. The insulation layer 12 electrically insulates the heat generating layer 13 on the upper side, the electrodes 15 to be described later and electric conductors 16 from the substrate 11 on the lower side and air inside the through-hole 111. That is, the insulation layer 12 is electrically insulative.

The shape stabilizing layer 14 is formed of a silicon nitride film. In short, the shape stabilizing layer 14 is made of silicon nitride. Preferably the silicon nitride is Si₃N₄. Preferably the silicon nitride film is a Si₃N₄ film. The shape stabilizing layer 14 is formed on the insulation layer 12. In the embodiment, the shape stabilizing layer 14 is a thin film having a plane size that is almost the same as that of the substrate 11, namely that of the insulation layer 12 as well. The shape stabilizing layer 14 supports a configuration on the upper side and above the substrate 11 along with the insulation layer 12. The plane size of the shape stabilizing layer 14 is almost the same as those of the substrate 11 and the insulation layer 12, and is accordingly larger than that of the through-hole 111. The shape stabilizing layer 14 is 0.2µm in thickness like the insulation layer 12. The shape stabilizing layer 14 is electrically insulative.

Foundation portions 17 made of tantalum nitride (TaN) are formed on part of an upper surface of the shape stabilizing layer 14. Each of the foundation portions 17 is a thin film that is in the shape of an oblong and is 0.03 µm in thickness. The foundation portions 17 are respectively disposed at both right and left sides with respect to an intermediate area of the upper surface of the shape stabilizing layer 14. In short, the infrared radiation device 1 includes two foundation portions 17. The foundation portions 17 are arranged so that longer sides and shorter sides thereof are parallel to a front-back direction and a right-left direction, respectively. In the embodiment, the foundation portions 17 are formed so that each of them exists on both insides of an edge in a cross direction of the opening of the through-hole 111 on the upper side. In the embodiment, both sides of about half position of each foundation portion 17 exist on both sides of a corresponding edge of the opening of the through-hole 111 on the upper side as shown in FIG. 2. It is thus desirable that an inner longer side (on a side of the through-hole 111) of each foundation portion 17 exist inside a corresponding edge of the opening of the through-hole 111 on the upper side and that an outer longer side thereof exist outside a corresponding edge of the opening of the through-hole 111 on the upper side. More preferably a length of part of each foundation portion 17 on an inner side of a corresponding edge of the opening of the through-hole 111 on the upper side in the right-left direction is longer than a length of part thereof on an outer side of the corresponding edge of the opening of the through-hole 111 on the upper side. The infrared radiation device 1 can accordingly cause the heat generating layer 13 to generate heat more efficiently. The edges of the opening of the through-hole 111 on the upper side correspond to an opening end of the through-hole 111 on the surface of the substrate 11. The infrared radiation device 1 has a structural tendency for stress concentration around the edges of the opening of the through-hole 111 on the upper side. It is however possible to promise to suppress stress concentration by preventing any member except for the substrate 11 from being on edge lines of the opening of the through-hole 111 on the upper side.

On each of the foundation portions 17 is formed an electric conductor 16 having a plane shape that is similar to that of a corresponding foundation portion 17. Each electric conductor 16 is formed so that it is stacked on a corresponding foundation portion 17. Each electric conductor 16 is a thin film that is 0.07 µm in thickness. The electric conductors 16 are arranged at both sides in the right-left direction one by one like the foundation portions 17. In short, the infrared radiation device 1 includes two electric conductors 16. The electric conductors 16 are made of tantalum (Ta). The electric conductors 16 are formed so that the foundation portions 17 are overlaid therewith. That is, each part of the electric conductors 16 is placed above the opening of the through-hole 111 on the upper side. Gas exists inside the through-hole 111. Heat conduction inside the through-hole 111 is lower than that of the substrate 11 made of silicon. When the heat generating layer 13 is heated to radiate infrared, the electric conductors 16 becomes very high temperature as a result of heat accumulation because each part thereof is placed above the opening of the through-hole 111 on the upper side. For example, when made of material such as aluminum (Al) having a low melting point, the electric conductors 16 may be broken or disconnected owing to high temperature degradation or the occurrence of melting. In the embodiment, the electric conductors 16 are made of tantalum having a higher melting point than that of aluminum or that of silicon which the substrate 11 is made of, and can accordingly have a lower possibility of disconnection owing to melting and improved reliability on connectivity. The embodiment has a low possibility of disconnection of the electric conductors 16 caused by melting, and therefore can have thin electric conductors 16. The whole of the infrared radiation device 1 can be thinned.

The heat generating layer 13 is made of tantalum nitride, and is formed on the shape stabilizing layer 14 and the electric conductors 16. The heat generating layer 13 is a rectangular thin film that is elongated in the right-left direction. Specifically, the heat generating layer 13 is in the shape of an oblong in planar view. The heat generating layer 13 is arranged so that a longer direction thereof agrees on a direction in which the two electric conductors 16 are put side by side. A length of the heat generating layer 13 in the longer direction is longer than those of corresponding sides of the opening of the through-hole 111 on the upper side, and a length, in a shorter direction, of the heat generating layer 13 is shorter than those of corresponding sides of the opening of the through-hole 111 on the upper side. As shown in FIG. 1, both ends of the heat generating layer 13 are respectively formed on the electric conductors 16 so that edges of the ends in the right-left direction agree with outer edges of the foundation portions 17 and the electric conductors 16. The heat generating layer 13 is formed so that the electric conductors 16 are overlaid with the ends thereof in the right-left direction. The heat generating layer 13 has a smaller planar size than those of the insulation layer 12 and the shape stabilizing layer 14 each of which has almost the same planar size as that of the substrate 11. In the specification, each of parts, formed on the electric conductors 16, of the heat generating layer 13 is defined as a covering 18. That is, each electric conductor 16 made of tantalum is between corresponding foundation portion 17 and covering 18, each of which is made of tantalum nitride, in a vertically direction. Specifically, each electric conductor 16 is between corresponding covering 18 and foundation portion 17. In the embodiment, the coverings 18 and the foundation portions 17 are made of the same material, namely tantalum nitride. Intermediate part of the heat generating layer 13 between right and left electric conductors 16 is formed on the shape stabilizing layer 14. That is, the foundation portions 17 and the electric conductors 16 are overlaid with both ends of the heat generating layer 13 in the right-left direction. As shown in FIG. 1, the heat generating layer 13 has a shape with steps between the intermediate part and both the ends in the right-left direction.

A length of the heat generating layer 13 in the front-back direction (a length of shorter sides thereof) is shorter than lengths of the foundation portions 17 and the electric conductors 16 in the front-back direction (lengths of longer sides thereof). Back side ends and front side ends of the foundation portions 17 and the electric conductors 16 are a little bit outside a back side end and a front side end of the heat generating layer 13, respectively. The length of the heat generating layer 13 in the front-back direction is shorter than lengths of corresponding sides of the opening of the through-hole 111 on the upper side. In the embodiment, the heat generating layer 13 has a length of 1 mm in the front-back direction. The foundation portions 17 and the electric conductors 16 thereon are arranged so that one of two sides of each of them along the front-back direction is inside the edges of the opening of the through-hole 111 on the upper side. Part, formed on at least shape stabilizing layer 14, of the heat generating layer 13 is placed above the opening of the through-hole 111 on the upper side. That is, part of the heat generating layer 13 except for parts of the coverings 18 is above the opening of the through-hole 111 on the upper side. Thus, in the infrared radiation device 1, since the heat generating layer 13 is above the through-hole 111 having higher insulation efficiency than that of the substrate 11, heat radiation from the heat generating layer 13 can be reduced and the temperature of the heat generating layer 13 can be raised quickly when the heat generating layer 13 rises in temperature as a result of energization to the heat generating layer 13 in order to radiate infrared. The infrared radiation device 1 is configured to radiate infrared by thermal radiation. Specifically, the heat generating layer 13 of the infrared radiation device 1 is energized, whereby the heat generating layer 13 generates heat and infrared is radiated from the heat generating layer 13. The infrared radiation device 1 can raise temperature of the heat generating layer 13 more quickly as a result of arrangement above the through-hole 111 having higher insulation efficiency than that of the substrate 11.

The heat generating layer 13 is 0.03 µm in thickness and much thinner than the insulation layer 12 and the shape stabilizing layer 14. Conversely, the shape stabilizing layer 14 has a larger thickness than that of the heat generating layer 13. The heat generating layer 13 of the infrared radiation device 1 has a small thermal capacity in comparison with that of a thick heat generating layer 13, and is to take a short time for the rise in temperature of the heat generating layer 13. The heat generating layer 13 that is very thin in thickness is hard to radiate heat in the right-left direction and hard to get cold. The heat generating layer 13 is higher in temperature than an ambient temperature, and then rises in temperature while radiating heat. When the heat generating layer 13 is thinned and is hard to get cold, the heat generating layer 13 can rise in temperature more quickly without loss. In the embodiment, the infrared radiation device 1 is provided with the through-hole 111 that is pierced in the substrate 11, but the recess 112 may be provided in the side of an upper surface, in contact with the insulation layer 12, of the substrate 11 instead of the through-hole 111 so that the heat generating layer 13 is above the recess 112. It is accordingly possible to reduce heat radiation from the heat generating layer 13 and to raise the temperature thereof quickly. From the point of view of reduction in thermal capacity of the heat generating layer 13, the heat generating layer 13 is preferably 0.1 µm or less, more preferably 0.05 µm or less and most preferably 0.03 µm or less.

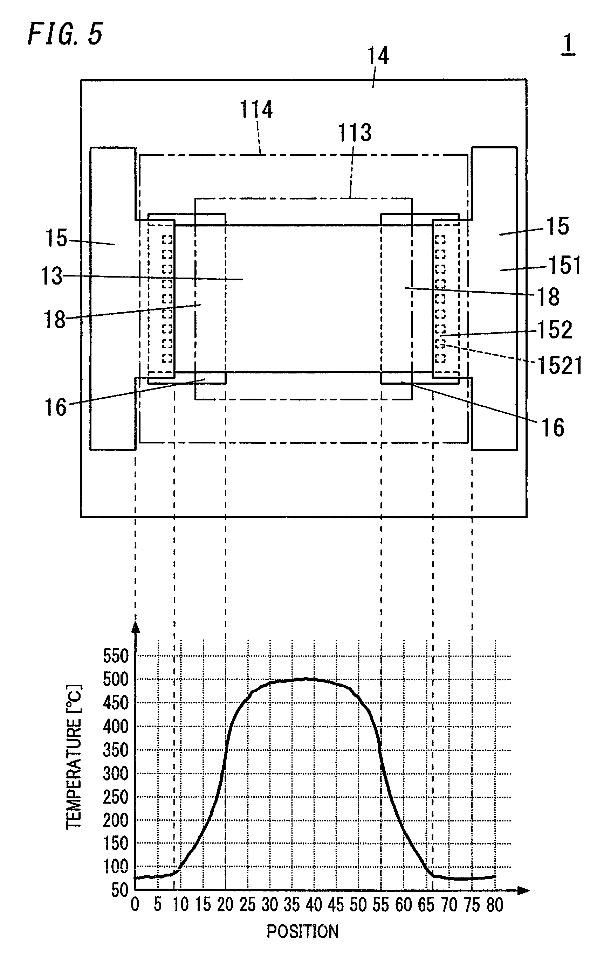

The embodiment is provided with the foundation portions 17 that are made of tantalum nitride and under the respective electric conductors 16 made of tantalum. The shape stabilizing layer 14 made of silicon nitride is under the foundation portions 17, and silicon nitride is electrically insulative. Tantalum is a substance having a high electrical resistance for electric conductors. However, when a tantalum layer is formed by sputtering, it is formed on a substance having electrical conductivity such as tantalum nitride, whereby electrical resistivity thereof can be reduced in comparison with a case where it is formed on a substance that is electrically insulative. In the embodiment, the coverings 18 formed of the same substance as those of the foundation portions 17 are formed on the respective electric conductors 16. That is, in the embodiment, the foundation portions 17, the electric conductors 16 and the coverings 18 are arranged in a pile, and both sides of each electric conductor 16 in the vertical direction are sandwiched between substances that are the same one, whereby each internal stress of the electric conductors 16 can be reduced. The electric conductors 16 are made of tantalum, and accordingly have a smaller electrical resistance than those of the heat generating layer 13 and the foundation portions 17, which are made of tantalum nitride. As a result, in the infrared radiation device 1, electric currents through portions where the foundation portions 17, electric conductors 16 and the coverings 18 are arranged in a pile flow mainly though the electric conductors 16, and therefore the coverings 18 have a small calorific value such that it can be ignored in comparison with a calorific value of the intermediate part of the heat generating layer 13. It is therefore conceivable that the coverings 18 of the infrared radiation device 1 are configured not to generate heat substantially. Specifically, it is conceivable that only the intermediate part, formed directly on the shape stabilizing layer 14, of the heat generating layer 13 forms an infrared radiator configured to radiate infrared by thermal radiation. It is recognized that parts, above the substrate 11, of the coverings 18 have a low heat generation temperature such that it can be ignored. FIG. 5 is a schematic view illustrating an example of temperature distribution of the infrared radiation device 1 in operation. In the example of the infrared radiation device 1, the heat generating layer 13 has the electrical resistivity of 9000 n Ω·m and the sheet resistance of 300 Ω / □ (i.e., 300 Ω/sq.). In the infrared radiation device 1, the electric conductors 16 have the electrical resistivity of 1400 nΩ·in and the sheet resistance of 20 Ω/□. In the infrared radiation device 1, the portions where the foundation portions 17, electric conductors 16 and the coverings 18 are arranged in a pile have the electrical resistivity of 900 nΩ·m and the sheet resistance of 7 Ω/□. Each covering 18 made of tantalum nitride can have a function as an anti-oxidation film for oxidation prevention of a corresponding electric conductor 16 made of tantalum.

Material of the heat generating layer 13 is not limited to tantalum nitride, but may be titanium nitride or the like, for example. Preferably the heat generating layer 13 is a tantalum nitride layer, a titanium nitride layer or the like from the point of view of chemical stability under high temperature and design facilitation of sheet resistance. Each sheet resistance of the tantalum nitride layer and the titanium nitride layer can be changed by changing composition thereof. In the case where material of the heat generating layer 13 is titanium nitride, material of the coverings 18 is also titanium nitride. Therefore, material of the foundation portions 17 is preferably titanium nitride.

On the heat generating layer 13 is formed the protective layer 19 made of silicon nitride. The insulation layer 12, the shape stabilizing layer 14, the foundation portions 17, the electric conductors 16 and the heat generating layer 13 (the coverings 18) are formed on the substrate 11. In this state, the protective layer 19 that is 0.3 µm in thickness is formed thereon. As shown in FIG. 1, parts, at the electric conductors 16 and around them, of a surface of the protective layer 19 are higher in height; part thereof without the heat generating layer 13, the electric conductors 16 and the like is lowest in height; and part thereof on the heat generating layer 13 is higher by the heat generating layer 13 in height. In this example, each height is a height from the surface of the insulation layer 12. In FIGS. 2 and 3, the protective layer 19 is omitted.

The protective layer 19 has a plane shape that is similar to that of the substrate 11. The protective layer 19 covers the heat generating layer 13 from the upper side of the heat generating layer 13 and prevents aged deterioration of the heat generating layer 13 caused by environmental effect.

The protective layer 19 is formed of a silicon nitride film. The protective layer 19 is not limited to the silicon nitride film, but may be formed of a silicon oxide film or may have a laminated structure of a silicon oxide film and a silicon nitride film, for example. The protective layer 19 is a passivation film for securing reliability of wet resistance and the like. It is preferable that the protective layer 19 have a high transmittance with respect to infrared in a prescribed wavelength region, radiated from the heat generating layer 13, but the transmittance of 100% is not indispensable thereto.

The electrodes 15 are made of aluminum and disposed above parts, outside the through-hole 111, of the substrate 11. Aluminum for the electrodes 15 is not limited to pure aluminum, but may be aluminum alloy containing different metal such as Si, Cu, Ti and Sc. Preferably the electrodes 15 are made of aluminum alloy. Examples of the aluminum alloy include AlSi, AlSiCu, AlCu, AlTiCu, AlSc and the like. The electrodes 15 are provided to the corresponding electric conductors 16, and accordingly two electrodes 15 are arranged on right and left sides one each, like the electric conductors 16. That is, the infrared radiation device 1 includes two electrodes 15. As shown in FIG. 2, each planar shape of the electrodes 15 includes a support 151 that is outside and away from the heat generating layer 13 and elongated in the front-back direction, and a connector 152 that protrudes from intermediate part of a corresponding support 151 and links the heat generating layer 13 and the corresponding support 151 together. Each planar shape of the supports 151 is in the shape of an oblong and the supports are arranged so that longitudinal directions thereof agree with the front-back direction. The supports 151 are integrally formed with the respective connectors 152, which constitute the respective electrodes 15.

As shown in FIG. 1, each connector 152 includes a plurality of connector pieces 1521 that are provided for one electric conductor 16 and comes into contact with a corresponding covering 18 via first through-holes (first holes) 191 provided in the protective layer 19 by etching or the like. In short, each connector 152 includes a plurality of connector pieces 1521 with respect to a corresponding covering 18, and the plurality of connector pieces 1521 come into contact with the corresponding covering 18 via the corresponding first through-holes 191 in the protective layer 19. The connector pieces 1521 are formed inside the respective first through-holes 191 in the protective layer 19. The connector pieces 1521 are electrically connected with a corresponding covering 18 having electrical conductivity. As a result, the electrodes 15 are electrically connected with the electric conductors 16 via the coverings 18. The number of connector pieces 1521 in each side is not limited to two or more, but may be one. Each opening size of the first through-holes 191 may be suitably set based on the number of corresponding connector pieces 1521, a size of a corresponding covering 18, contact resistance between corresponding covering 18 and connector pieces 1521, and the like.

As shown in FIG. 1, each support 151 comes into contact with the shape stabilizing layer 14 via a second through-hole (second hole) 192 provided in the protective layer 19 by etching or the like. The supports 151 are in contact with the shape stabilizing layer 14. The supports 151 support respective connectors 152. The supports 151 are thermally contacted with the substrate 11 via the insulation layer 12 and the shape stabilizing layer 14. Such thermal connection means a state capable of transmitting heat of the supports 151 to the substrate 11 via the insulation layer 12 and the shape stabilizing layer 14 when the supports 151 are higher in temperature than the substrate 11. The thermal connection means thermal coupling between the supports 151 and the substrate 11. The second through-holes 192, which communicate with the shape stabilizing layer 14, in the protective layer 19 are outside and away from the heat generating layer 13, the electric conductors 16 and the foundation portions 17 so that these are prevented from being exposed. In this case, the electrodes 15 can use the substrate 11 as a heat sink. Specifically, the infrared radiation device 1 can use the substrate 11 as the heat sink for radiating respective heat from the electrodes 15 because the second through-holes 192 in which respective parts of the supports 151 are embedded are formed at positions that are away from a vertical projection area, a projection direction of which is along the thickness direction of the insulation layer 12, of the opening of the through-hole 111 on the upper side in comparison with the heat generating layer 13, the electric conductors 16 and the foundation portions 17. In the infrared radiation device 1, each of the shape stabilizing layer 14 and the insulation layer 12 is made of material having a lower thermal conductivity than silicon. Accordingly a sum of a thickness of the shape stabilizing layer 14 and a thickness of the insulation layer 12 is preferably 1 µm or less, more preferably 0.7 µm or less and most preferably 0.4 µm or less, from the point of view of transmission of respective heat of the electrodes 15 to the substrate 11. Preferably each second through-hole 192 has an opening that is in the shape of an oblong along a longitudinal direction of a corresponding support 151. In this case, an area of each opening, on a lower end, of the second through-holes 192 in the infrared radiation device 1 can be set as a contact area with a corresponding support 151 and the shape stabilizing layer 14. In addition, the protective layer 19 can reduce thermal transmission in the right-left direction. As a result, respective heat of the supports 151 can be radiated efficiently. From the point of view of more efficient transmission of the respective heat of the supports 151 to the substrate 11, each of the supports 151 and the second through-holes 192 of the protective layer 19 preferably has a longer length in a longitudinal direction thereof than that of each connector 152 in a longitudinal direction thereof.

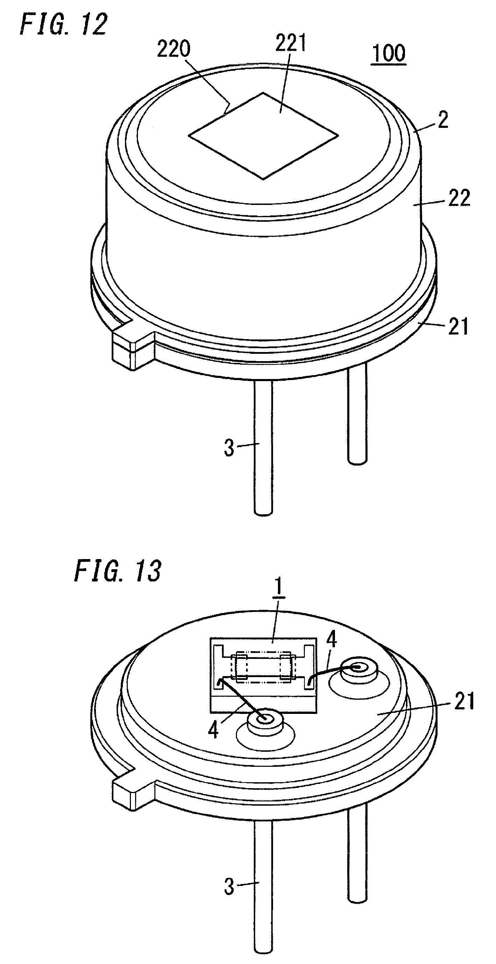

Each support 151 of the infrared radiation device 1 functions as a bonding pad. The infrared radiation device 1 can be used in a state in which it is mounted on a print board, a stem 21 as part of a package 2 to be described later (see FIG. 12) or the like, for example. The stem 21 is a base that supports the infrared radiation device 1. In the infrared radiation device 1, for example, when a thin metallic wire (a bonding wire) is bonded to a support 151, part of a surface side of the support 151 may be alloyed depending on a combination of respective material of the supports 151 and the thin metallic wire. The electrodes 15 therefore require having a fixed thickness or more. The electrodes 15 also need to have a fixed thickness or more from the point view of prevention of a bad influence on the shape stabilizing layer 14 and the insulation layer 12 caused by ultrasonic waves and pressure to be applied on wire bonding. In the embodiment, the supports 151 are 1.5 µm in height. In short, each thickness of the electrodes 15 is set to 1.5 µm. In the infrared radiation device 1, the insulation layer 12 is 0.2 µm in thickness, the shape stabilizing layer 14 is 0.2 µm in thickness, the heat generating layer 13 is 0.03 µm in thickness, the foundation portions 17 are 0.03 µm in thickness, the electric conductors 16 are 0.07 µm in thickness, and the protective layer 19 is 0.3 µm in thickness. The infrared radiation device 1 therefore has about 0.7 µm in thickness from a bottom surface of the insulation layer 12 to a top surface of the protective layer 19, on the through-hole 111. Thus, the electrodes 15 are considerably thicker members than other members on the substrate 11. In the embodiment, the thicker electrodes 15 are disposed only on parts of the substrate 11 that are outside and apart from the opening of the through-hole 111 on the upper side, whereby respective stress caused by the electrodes 15 can be avoided applying to members on the through-hole 111 as much as possible. Specifically, the infrared radiation device 1 can reduce the respective stress caused by the electrodes 15 on the insulation layer 12, the shape stabilizing layer 14, the heat generating layer 13, the foundation portions 17, the electric conductors 16 and the like. The infrared radiation device 1 can reduce the respective stress caused by the electrodes 15 on the thinner heat generating layer 13.

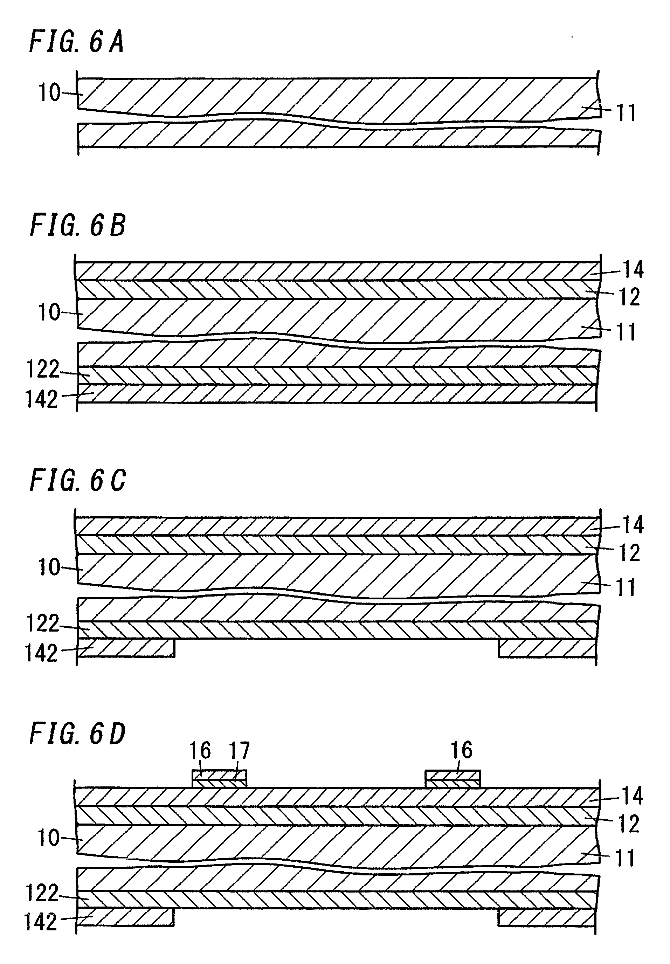

An example of a production method of the infrared radiation device 1 in the embodiment is explained with reference to FIGS. 6A, 6B, 6C, 6D, 7A, 7B, 7C and 8.

In the production method of the infrared radiation device 1, first a substrate 11 is prepared (see FIG. 6A), and both surfaces of a silicon plate are oxidized whereby a silicon oxide film (hereinafter referred to as a "first silicon oxide film") on a surface of the substrate 11 forms an insulation layer 12. In addition, a second silicon oxide film 122 is formed on a back surface of the substrate 11 (see FIG. 6B). In this example, the insulation layer 12 and the second silicon oxide film 122 are formed by a thermal oxidation method.

In the production method of the infrared radiation device 1, a silicon nitride film (hereinafter referred to as a "first silicon nitride film") is then formed on the insulation layer 12 and forms a shape stabilizing layer 14. In addition, a second silicon nitride film 142 is formed on the second silicon oxide film 122 (see FIG. 6B). In this example, the shape stabilizing layer 14 and the second silicon nitride film 142 are formed by an LPCVD method.

In the production method of the infrared radiation device 1, part, corresponding to an opening of an etching mask, of the second silicon nitride film 142 on a side of the back surface of the substrate 11 is then removed by photolithography technique and etching technology (see FIG. 6C).

In the production method of the infrared radiation device 1, a first tantalum nitride layer to be formed into two foundation portions 17 is then formed on the shape stabilizing layer 14 by a sputtering method. In this example, the first tantalum nitride layer is formed by the sputtering method.

In the production method of the infrared radiation device 1, a tantalum layer to be formed into two electric conductors 16 is then formed on the first tantalum nitride layer. In this example, the tantalum layer is formed by the sputtering method.

In the production method of the infrared radiation device 1, the two foundation portions 17 and the two electric conductors 16 are then formed by patterning a laminated film of the first tantalum nitride layer and the tantalum layer (see FIG. 6D). Patterning the laminated film of the first tantalum nitride layer and the tantalum layer is performed by photolithography technique and etching technology.

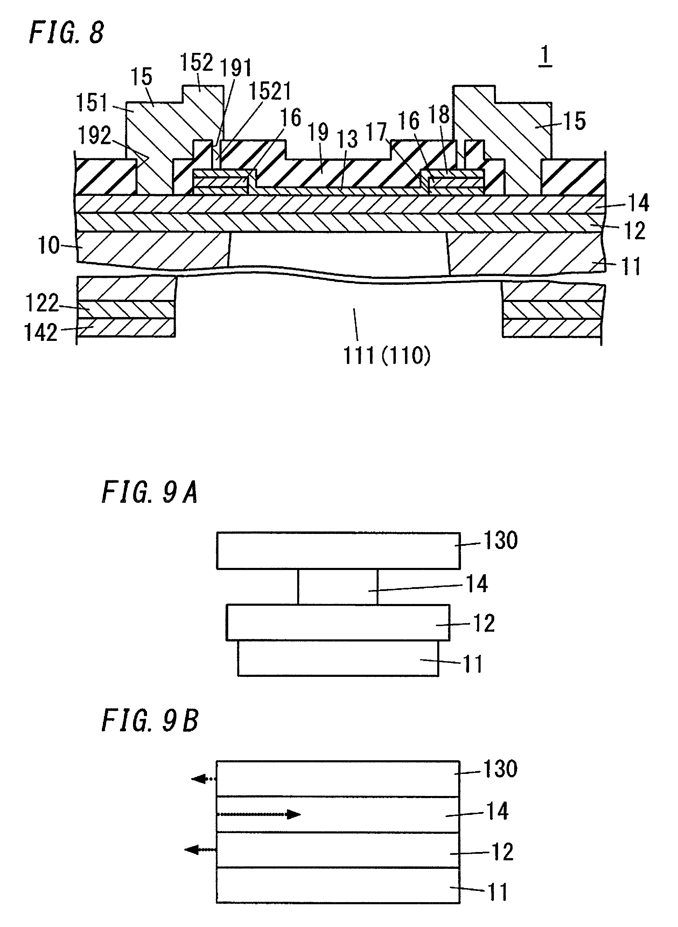

In the production method of the infrared radiation device 1, a second tantalum nitride layer 130 to be formed into a heat generating layer 13 is then formed on a side of the surface of the substrate 11 (see FIGS. 9A and 9B). In this example, the second tantalum nitride layer 130 is formed by the sputtering method. In the production method of the infrared radiation device 1, preferably annealing treatment of the second tantalum nitride layer 130 is performed. RTA (rapid thermal annealing) is preferable as the annealing treatment. In the annealing treatment, an annealing temperature is set to a higher temperature than an operating temperature of the infrared radiation device 1.

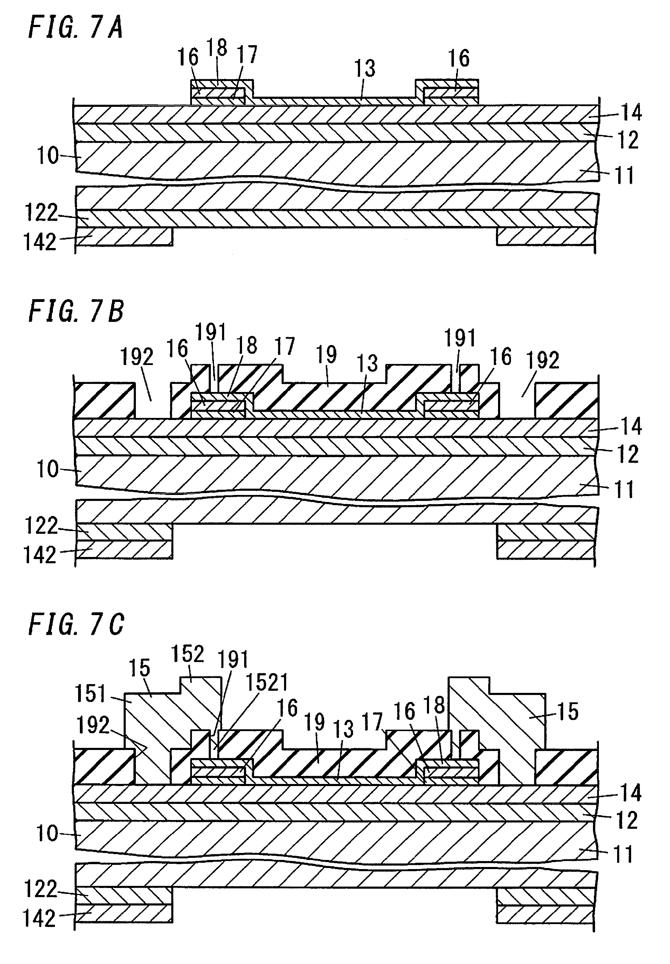

In the production method of the infrared radiation device 1, the heat generating layer 13 having a narrower area than that of the shape stabilizing layer 14 is then formed by patterning the second tantalum nitride layer 130 (see FIG. 7A). Patterning the heat generating layer 13 is performed by photolithography technique and etching technology, for example.

In the production method of the infrared radiation device 1, a protective layer 19 made of silicon nitride is then formed on the side of the surface of the substrate 11 (see FIG. 7B). For example, the protective layer 19 is formed by a plasma CVD method. In the production method of the infrared radiation device 1, first through-holes 191 and second through-holes 192 for arrangement of electrodes 15 are then formed in the protective layer 19 (see FIG. 7B). The first through-holes 191 and the second through-holes 192 are formed by photolithography technique and etching technology, for example. Hydrofluoric acid is used for etchant for forming the first through-holes 191 and the second through-holes 192, and unwanted part of the second silicon oxide film 122 on the side of the back surface of the substrate 11 is also etched. When the unwanted part of the second silicon oxide film 122 on the side of the back surface of the substrate 11 is etched, the second silicon nitride film 142 on the side of the back surface of the substrate 11 is protected by resist.

In the production method of the infrared radiation device 1, the electrodes 15 are then formed (see FIG. 7C). The electrodes 15 can be formed by, for example, forming an aluminum film by the sputtering method and then patterning the aluminum film. Patterning the aluminum film can be performed by the photolithography technique and etching technology.

In the production method of the infrared radiation device 1, a through-hole 111 is then formed from the side of the back surface of the substrate 11. When etching is performed in order to form the through-hole 111, an etching mask layer for masking is provided on part, not to be formed with the through-hole 111, of the back surface of the substrate 11, where the etching mask layer is formed of a laminated film of the second silicon oxide film 122 and the second silicon nitride film 142. Preferably etching for forming the through-hole 111 is anisotropic etching with an alkaline solution.

The first half of the production method of the infrared radiation device 1 is finished after the process of forming the through-hole 111 is performed.

When the infrared radiation device 1 is manufactured, every process until the process of forming the through-hole 111 is finished is performed with wafer. In the production method of the infrared radiation device 1, it is then divided into individual infrared radiation devices 1 by a dicing process. Every process until the process of forming the through-hole 111 is finished being performed with wafer means forming a plurality of infrared radiation devices 1 on a silicon wafer 10 to form a plurality of substrates 11 (see FIG. 6A and the like). Therefore, in the production method of the infrared radiation device 1, the substrates 11 in the above-mentioned explanation can be replaced with the wafer 10. Every process that is performed with the wafer is the first half of the production method that is called a wafer process.

In such an infrared-radiation-device production method in general, high temperature atmosphere that is equal to or more than an operational temperature of infrared radiation devices 1 during production may be set to a condition for a process in order to achieve stable heat generating operation by infrared radiation devices. The operational temperature means a temperature of heat generating layers 13 while the heat generating layers 13 are energized. For example, the operational temperature is 100 to 700°C. The infrared radiation devices 1 can vary a peak wavelength of infrared radiation spectrum by varying the operational temperature. In a production method of an infrared radiation device(s) 1 according to the embodiment, for example, a process temperature is set to: about 1000°C in a process of forming a silicon oxide film for an insulation layer 12; about 800°C in a process of forming a first silicon nitride film for a shape stabilizing layer 14; about 200°C in a process of forming a first tantalum nitride layer; and about 200°C in a process of forming a second tantalum nitride layer 130. The process temperature is an ambient temperature or a substrate temperature of process conditions in processes in which thermal reaction or effect is utilized. In the processes, the ambient temperature or the substrate temperature is increased from an ordinary temperature to a process temperature, and the process temperature is maintained for a prescribed process time and then decreased to the ordinary temperature. Deformation may however occur inside layers in response to a difference of thermal expansion coefficients of adjoining layers because the thermal expansion coefficients may differ from each other depending on respective material of the layers. Layers in the embodiment are an insulation layer 12 formed of a first silicon oxide film, a shape stabilizing layer 14 formed of a first silicon nitride film, a second tantalum nitride layer, a heat generating layer 13, and the like. The substrate 11 is seldom influenced by other layers because it is very thicker than those of the other layers. The layers are arranged in a pile without space. Therefore, even if each layer has therein deformation, the influence is hard to appear in the shape thereof before a through-hole 111 is formed in the substrate 11. In this state, each layer is to expand and contract if stress is released as shown in FIG. 9A, but it is fixed to the same size as that of the substrate 11 as shown in FIG. 9B because it is sported by the substrate 11. That is, a layer that contracts when stress is released is in a forcibly expanded state and has internal stress in a contracting direction. Conversely, a layer that expands when stress is released has internal stress in an expanded direction. However, after the through-hole 111 is formed, part of the through-hole 111 is released in a state in which each layer has internal stress. The internal stress in the contracting direction is compressive stress. The internal stress in the expanded direction is tensile stress. In FIG. 9B, a direction of tensile stress is schematically depicted by a left arrow, a direction of compressive stress is schematically depicted by a right arrow, and the strength of internal stress is schematically depicted by length size of an arrow. The length of the arrow means a length from a base end to a tip end thereof. As the length of an arrow is longer, internal stress thereof is larger, and as shorter, it is smaller.

A comparison example without stress design has thin film layers but has no shape stabilizing layer 14, for example. In this case, if a through-hole 111 is formed in a substrate 11, respective deformation inside the layers interact with reduction in mechanical strength caused without support by part, corresponding to the through-hole 111, of the substrate 11. It is therefore conceivable that the layers would be deformed. In the structure of the embodiment, the silicon oxide film for the insulation layer 12 shows less contraction caused by drop in temperature in comparison with the substrate 11 made of silicon. The drop in temperature occurs when temperature drops from a process temperature during production or when temperature drops after energizing the heat generating layer 13 in use is stopped. With the comparison example, if stress is released, the heat generating layer 12 becomes in a relatively expanded state in comparison with the substrate 11. In this comparison example, the heat generating layer 12 on the through-hole 111 wrinkles, which also influences the heat generating layer 13 formed thereon. "(The layer) wrinkles" means that (the layer) forms lines. The insulation layer 12 wrinkles means that the insulation layer 12 is deformed. Since the comparison example has very thin heat generating layer 13 like the configuration of the embodiment, if the insulation layer 12 wrinkles and is folded, the heat generating layer 13 thereon may teared. Even if the comparison example is not broken when temperature drops, the heat generating layer 13 may be broken by an impact on the occurrence of deformation of part on the through-hole 111 caused by thermal expansion or contraction when the heat generating layer 13 is energized.

In the embodiment, the shape stabilizing layer 14 formed of the first silicon nitride film is stacked on the insulation layer 12 formed of the first silicon oxide film. The first silicon nitride film differs from the first silicon oxide film in that it is a thin film that shows larger contraction caused by drop in temperature than the substrate 11 made of silicon. That is, in the embodiment, the insulation layer 12 has a smaller thermal expansion coefficient than a thermal expansion coefficient of the substrate 11, and the shape stabilizing layer 14 has a larger thermal expansion coefficient than the thermal expansion coefficient of the substrate 11. In short, the shape stabilizing layer 14 differs from the insulation layer 12 in that it has a larger thermal expansion coefficient than that of the substrate 11. In this configuration of the infrared radiation device 1, the insulation layer 12 in which internal stress in the expanded direction is to occur is integrally stacked with the shape stabilizing layer 14 in which internal stress in the contracted direction is to occur, whereby part of respective internal stress can be canceled. Specifically, at least part of internal stress in the insulation layer 12 cancels out at least part of internal stress in the shape stabilizing layer 14. As a result, the insulation layer 12 of the infrared radiation device 1 is hard to wrinkle in comparison with the comparison example in which only the insulation layer 12 is provided immediately below the heat generating layer 13. The internal stress in the shape stabilizing layer 14 can be adjusted by suitably setting the process condition in the case where the first silicon nitride film for the shape stabilizing layer 14 is formed by the LPCVD method, for example. The internal stress in the shape stabilizing layer 14 can be also adjusted by suitably changing a method of forming the first silicon nitride film.

In the infrared radiation device 1, the insulation layer 12 may have a larger thermal expansion coefficient than a thermal expansion coefficient of the substrate 11, and the shape stabilizing layer 14 may have a smaller thermal expansion coefficient than the thermal expansion coefficient of the substrate 11. The infrared radiation device 1 is not limited to such a configuration in which with respect to the thermal expansion coefficient of the substrate 11, that of the insulation layer 12 has an opposite relation to that of the shape stabilizing layer 14, as stated above. The thermal expansion coefficient of the shape stabilizing layer 14 may be between the thermal expansion coefficient of the insulation layer 12 and the thermal expansion coefficient of the substrate 11, whereby the occurrence of wrinkles can be suppressed.

As stated above, the shape stabilizing layer 14 suppresses the deformation of the insulation layer 12, namely stabilizes the shape of the insulation layer 12 whereby the shape of the heat generating layer 13 thereon can be stabilized in the embodiment. In short, the shape stabilizing layer 14 is provided as a function layer for stabilizing respective shapes of the insulation layer 12 and the heat generating layer 13 in comparison with a case where a heat generating layer 13 is formed directly on an insulation layer 12.

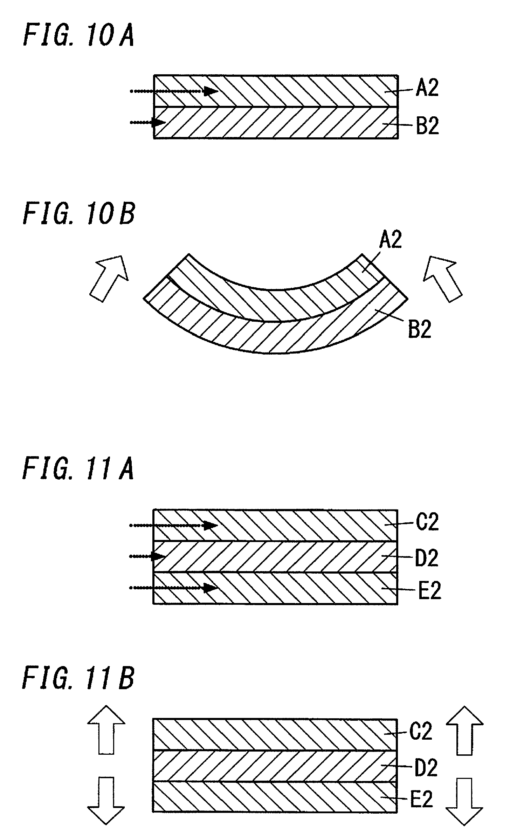

In the embodiment, the second tantalum nitride layer 130 to be formed into the heat generating layer 13 on the shape stabilizing layer 14 is made of tantalum nitride that is harder to contract than the substrate 11 when temperature decreases. That is, in the embodiment, the shape stabilizing layer 14 having a larger thermal expansion coefficient than that of the substrate 11 is sandwiched between the heat generating layer 13 and the insulation layer 12 having a smaller thermal expansion coefficient than that of the substrate 11. In the case where only two layers A2 and B2 that have different contraction characteristics caused by drop in temperature as shown in FIG. 10A are stacked, a combination of the two layers A2 and B2 may warp as shown in FIG. 10B. As a result, if the heat generating layer 13 on the upper side warps, it may have influence on infrared radiation direction besides mechanical strength. In FIG. 10A, respective contraction sizes of the two layers A2 and B2 in planar direction (the right-left direction of FIG. 10A) are schematically depicted by lengths of arrows. In FIG. 10B, each outline arrow shows a directions of bending stress acting on a laminated body of the layers A2 and B2.

In the embodiment, a layer D2 having a relatively large thermal expansion coefficient integrally intervenes between two layers C2 and E2 each of which has a relatively small thermal expansion coefficient as show in FIG. 11A. In this case, as shown in FIG. 11B, a combination thereof is hard to warp because parts of respective stress cancel out each other. In the embodiment, the heat generating layer 13 and the insulation layer 12 correspond to the layers C2 and E2, while the shape stabilizing layer 14 corresponds to the layer D2. The sandwiching layers C2 and E2 and the sandwiched layer D2 may have thermal expansion coefficients having an opposite magnitude relation. In the embodiment, the thermal expansion coefficient of the substrate 11 is defined as a reference to magnitude of other thermal expansion coefficients, but the thermal expansion coefficients of the three layers may be set based on a relative magnitude relation because whether to warp or not largely depends on a relative magnitude relation between the thermal expansion coefficients of the two sandwiching layers and the thermal expansion coefficient of the sandwiched layer. In FIG. 11A, respective contraction sizes of the two layers C2, D2 and E2 in planar direction (the right-left direction of FIG. 11A) are schematically depicted by lengths of arrows. In FIG. 11B, each outline arrow shows a direction of bending stress acting on a laminated body of the layers C2, D2 and E2.

As shown in FIG. 12, the infrared radiation device 1 of the embodiment may be housed in the package 2 having the metallic stem 21 and a metallic cap 22, and used as a component of an infrared light source 100. The stem 21 is in the shape of a disk. The stem 21 is a base that supports the infrared radiation device 1. Terminal pins 3 for power supply to the infrared radiation device 1 are attached to the stem 21. The infrared light source 100 includes two terminal pins 3. The two terminal pins 3 are pierced in the stem 21 in a thickness direction thereof. Each terminal pin 3 is fixed to the stem 21 with a sealing member that is electrically insulative, and electrically insulated from the stem 21. Examples of the sealing member include glass and the like. The cap 22 is formed with a window hole 220 above the infrared radiation device 1, and a lens 221 is disposed so that it closes the window hole 220. As shown in FIG. 13, the infrared radiation device 1 is substantially mounted on a center of the stem 21. In the infrared light source 100, each support 151 of the electrodes 15 is electrically connected with a corresponding terminal pin 3 via a conductive wire 4 by wire bonding. Each wire 4 is a thin metallic wire. When the infrared radiation device 1 is mounted on the stem 21, an opening of the through-hole 111 on the lower side is covered with an upper surface of the stem 21. As a result, in the infrared light source 100, an internal space of the through-hole 111 is a closed space. The cap 22 is fixed to the stem 21 so that it covers the infrared radiation device 1 and the wires 4.

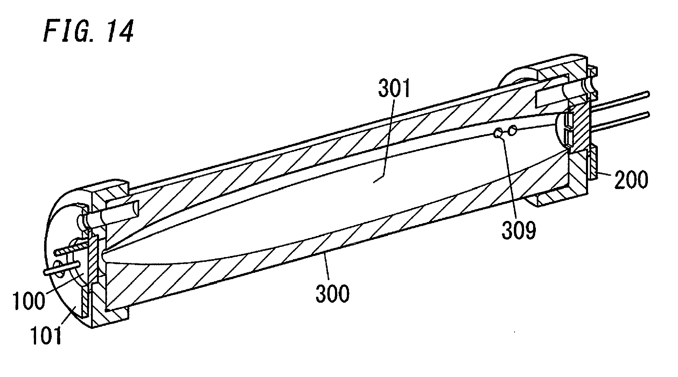

As shown in FIG. 14, a light source 101 including the infrared light source 100 constitutes an infrared sensor along with a photo receiver 200 and a light guide (tube) 300. The photo receiver 200 is configured to receive infrared to measure an absorption amount and a reflection amount of infrared. The light guide 300 is disposed between the light source 101 and the photo receiver 200 and forms a detection space 301. Specifically, the light guide 300 is shaped like a tube and has an internal space as the detection space 301. In the infrared sensor, the light source 101 is disposed at a first side, in an axial direction, of the light guide 300 and the photo receiver 200 is disposed at a second side, in the axial direction, of the light guide 300. The light guide 300 has an inner wall face for mirror reflection of infrared radiated from the light source 101, and is designed so that infrared radiated from the light source 101 is efficiently transmitted to the photo receiver 200. The infrared radiated from the light source 101 is infrared that is radiated from the infrared radiation device 1 to be emitted through the lens 221. When the light guide 300 is made from, e.g., synthetic resin, it can have a configuration in which a reflection layer for reflecting infrared is provided on a side of the inner wall face. The material of the light guide 300 is not limited to the synthetic resin, but may be metal, for example. The infrared sensor is configured to detect, with the photo receiver 200, infrared that is radiated from the light source 101 to pass through the detection space 301, thereby detecting the attenuation of the infrared through the detection space 301 by absorption or reflection caused by a substance in the detection space 301. For example, the substance in the detection space is target gas to be detected or gas containing target gas to be detected. For example, the target gas to be detected is carbon dioxide. The infrared has an absorbing wavelength depending on a kind of the target gas to be detected. For example, absorbing wavelengths of methane, carbon dioxide, carbon monoxide and nitric monoxide are in the vicinity of 3.3 µm, 4.3 µm, 4.7 µm and 5.3 µm, respectively.

The light guide 300 is formed with vent holes 309 through which the internal space of the light guide and an outside thereof communicate. That is, the light guide 300 is configured to allow the target gas to enter and exit the internal space. The light guide 300 allows gas to enter the internal space through the vent holes 309 or allows gas inside the internal space to exit there.

For example, the infrared sensor can function as an infrared gas sensor. The infrared gas sensor is configured to detect gas based on an absorbing wavelength depending on a kind of the target gas to be detected, thereby capable of enhancing gas discrimination. For example, in the infrared gas sensor, external target gas to be detected or gas containing the target gas to be detected enters the internal space as the detection space 301 through the vent holes 309. In the infrared gas sensor, when concentrations of the target gas to be detected in the detection space 301 increase, an amount of infrared entering the photo receiver 200 decreases. When concentrations of the target gas to be detected in the detection space 301 decrease, an amount of infrared entering the photo receiver 200 increases. For example, in the photo receiver 200, first and second detecting elements are disposed in a package. Each of the first and second detecting elements may be formed of a pyroelectric detector. In the photo receiver 200, a first optical filter is disposed in front of a light receiving face of the first detecting element, while a second optical filter is disposed in front of a light receiving face of the second detecting element. The first optical filter has a first transmission wavelength range that is set so that the filter allows infrared, having an absorbing wavelength of the target gas to be detected, to pass through. The second optical filter has a second transmission wavelength range that does not overlap the first transmission wavelength range and that is set so that the filter allows infrared, having a reference wavelength that is not absorbed by the gas, to pass through.

For example, the photo receiver 200 includes a signal processing circuit. Preferably the signal processing circuit is configured to calculate gas concentrations based on a first output signal of the first detecting element and a second output signal of the second detecting element. In this case, the infrared gas sensor can have improved measurement accuracy.

The infrared gas sensor includes a drive circuit configured to intermittently energize the infrared radiation device 1, and a controller configured to control the drive circuit. For example, the controller is formed of a microcomputer and an appropriate program(s) installed thereon.

The infrared gas sensor adjusts an input voltage which the drive circuit applies across the two electrodes 15 of the infrared radiation device 1, thereby capable of varying Joule heat generated by the heat generating layer 13 and varying the operating temperature of the heat generating layer 13.

The drive circuit is configured to apply a voltage having a prescribed pulse width (hereinafter referred to as a "pulse voltage") at regular time intervals. That is, the infrared gas sensor is to periodically apply a pulse voltage to the infrared radiation device 1 through the drive circuit. In the infrared radiation device 1, a time period in which a pulse voltage is applied thereto is an energizing time period, and a time period in which a pulse voltage is not applied thereto is a de-energizing time period. Driving the infrared radiation device 1 corresponds to driving the infrared light source 100. The drive circuit is configured to supply the infrared radiation device 1 with a voltage having the prescribed pulse width determined by the controller.

In the infrared light source 100, as shown in FIG. 12, the infrared radiation device 1 is housed in the package 2 including the metallic stem 21 and the metallic cap 22, and the lens 221 is disposed in the window hole 220 of the cap 22. In an aspect, air as gas is in the package 2. In the specification, part of the back surface of the insulation layer 12 is in contact with not the substrate 11 but a gas layer. If the inside of the package 2 is in vacuum, it is conceivable that the part of the back surface of the insulation layer 12 is in contact with a vacuum layer. However, in such a package 2, the existence of perfect vacuum state is not realistic. The perfect vacuum state means perfect vacuum. In the specification, a vacuum state means a state of gas of which pressure is lower than atmospheric pressure. In other words, a vacuum state means reduced-pressure atmosphere. In the specification, a vacuum state means a state of space of which pressure is 0.1 Pa or less. That is, when the inside of the package 2 is in vacuum, some sort of gas is therein. In this case, the part of the back surface of the insulation layer 12 is to be in contact with not the substrate 11 but a gas layer. In the infrared light source 100, gas inside the through-hole 111 of the infrared radiation device 1 forms a gas layer. Preferably gas forming the gas layer is inert gas. Examples of the inert gas include N₂ gas, Ar gas and the like.

Since the infrared light source 100 includes the gas layer, it can more efficiently raise the temperature of the heat generating layer 13 for the energizing time period corresponding to the prescribed pulse width. It is possible to secure a desired infrared amount while shortening the prescribed pulse width. Since the infrared light source 100 includes the gas layer, infrared can be radiated over a longer time period than the energizing time period even for the de-energizing time period. By shortening the prescribed pulse width, electricity consumption of the infrared gas sensor can be reduced.

Even if the infrared radiation device 1 is not housed in the package 2, the part of the back surface of the insulation layer 12 is in contact with a gas layer inside the through-hole 111.

As stated above, the infrared radiation device 1 according to the embodiment includes the substrate 11, the insulation layer 12 disposed on the surface of the substrate 11 and the heat generating layer 13 provided on a side of the surface of the insulation layer 12. A side, of the substrate 11, of the insulation layer 12 is provided with the through-hole 111 pierced in the substrate 11, or the recess 112 that sets back the substrate 11 to an opposite side to the insulation layer 12. Each foundation portion 17 is provided on the surface of the insulation layer 12 and is outside the through-hole 111 from an inner periphery thereof or outside the recess 112 from an inner periphery thereof. The electric conductors 16 having smaller electrical resistance than those of the foundation portions 17 are provided on respective surfaces of the foundation portions 17. Each surface of the electric conductors 16 is covered with a corresponding covering 18 (an outer periphery) of the heat generating layer 13. Each electrode 15 is electrically connected to part, which is outside and away from the through-hole 111 or the recess 112, of a surface of a corresponding covering 18 of the heat generating layer 13. It is therefore possible to prevent heat degradation of the electrodes 15.

That is, in the embodiment, the side, of the substrate 11, of the insulation layer 12 is provided with the through-hole 111 pierced in the substrate 11 or the recess 112 that sets back the substrate 11 to an opposite side to the insulation layer 12. Each foundation portion 17 is provided on the surface of the insulation layer 12 and is outside the through-hole 111 from the inner periphery thereof or outside the recess 112 from the inner periphery thereof. The electric conductors 16 having smaller electrical resistance than those of the foundation portions 17 are provided on respective surfaces of the foundation portions 17. Each surface of the electric conductors 16 is covered with a corresponding covering 18 (an outer periphery) of the heat generating layer 13. Each electrode 15 is electrically connected to the part, which is outside and away from the through-hole 111 or the recess 112, of the surface of a corresponding covering 18 of the heat generating layer 13. In the embodiment, each electrode 15 is connected with the heat generating layer 13 on part thereof that is outside and away from the through-hole 111 or the recess 112. Therefore, heat of the heat generating layer 13 can be radiated sufficiently through the substrate 11. As a result, heat degradation of the electrodes 15 can be prevented.

In the embodiment, each covering 18 of the heat generating layer 13 is arranged on corresponding electric conductor 16 and foundation portion 17 in a pile. Accordingly, small electric current flows through each covering 18 and each covering 18 of the heat generating layer 13 just generates a negligible amount of heat. In the embodiment, it is accordingly possible to prevent heat degradation of the electrodes 15 connected to the heat generating layer 13.

In the infrared radiation device shown in the abovementioned prior art, the insulation layer and the heat generating layer are sequentially formed on the substrate by a thermal oxidation or CVD method. A process of forming the layers is performed under high temperature environment in general. After the process, the substrate is cooled down to an ordinary temperature, which causes the occurrence of wrinkles in the heat generating layer of the infrared radiation device shown in the prior art. There is therefore a concern that the heat generating layer would be damaged in subsequent energization. That is, the heat generating layer is influenced by thermal contraction of the substrate because the thermal expansion coefficient of the substrate is largely different from those of the insulation layer and the heat generating layer and the substrate has a thickness much larger than those of the insulation layer and the heat generating layer.

The infrared radiation device 1 according to the embodiment includes the substrate 11, the insulation layer 12 provided on the surface of the substrate 11, and the heat generating layer 13 provided on the side of the surface of the insulation layer. The shape stabilizing layer 14 for the heat generating layer 13 is between the insulation layer 12 and the heat generating layer 13. The substrate 11, the insulation layer 12, the shape stabilizing layer 14 and the heat generating layer 13 are integrated with each other. It is therefore possible to prevent damage to the infrared radiation device 1. That is, in the infrared radiation device 1 of the embodiment, the shape stabilizing layer 14 for the heat generating layer 13 is between the insulation layer 12 and the heat generating layer 13, and the substrate 11, the insulation layer 12, the shape stabilizing layer 14 and the heat generating layer 13 are integrated with each other. The heat generating layer 13 is accordingly hard to be influenced by thermal contraction of the substrate 11. It is subsequently possible to prevent damage to the infrared radiation device 1.

Hereinafter, the infrared radiation device 1 of the embodiment is further explained in detail. In the specification, a cavity 110 is defined as a concept including both the through-hole 111 pierced in the substrate 11 in the thickness direction thereof, and the recess 112 (hereinafter also referred to as a "hole 112") formed in a surface side of the substrate 11. That is, in FIG. 1, the through-hole 111 corresponds to the cavity 110. In FIG. 3, the hole 112 corresponds to the cavity 110.

In the infrared radiation device 1, the heat generating layer 13 is energized whereby the heat generating layer 13 generates heat and infrared is radiated by thermal radiation from the heat generating layer 13.

In the infrared radiation device 1, a laminated film of the insulation layer 12 formed of a silicon oxide film and the shape stabilizing layer 14 formed of a silicon nitride film constitute a thin film. The heat generating layer 13 is formed on a surface side of the thin film. In the infrared radiation device 1, the insulation layer 12 and the shape stabilizing layer 14 have respective internal stress of which directions are opposite directions. The shape stabilizing layer 14 is a function layer for stabilizing the shape of the heat generating layer 13 in comparison with a case where the thin film is formed of only the insulation layer 12.

In FIG. 2, a dash dot dot line shows an outer peripheral line 113 (hereinafter referred to as a "first outer peripheral line 113") of a vertical projection area of an opening edge, on the surface of the substrate 11, of the cavity 110, where a projection direction of the vertical projection area is along a thickness direction of the insulation layer 12. That is, the vertical projection area is a vertical projection area onto a plane perpendicular to the insulation layer 12 in the thickness direction. In FIG. 2, another dash dot dot line shows an outer peripheral line 114 (hereinafter referred to as a "second outer peripheral line 114") of a vertical projection area of an opening edge, on the back surface of the substrate 11, of the cavity 110, where a projection direction of the vertical projection area is along the thickness direction of the insulation layer 12. The cavity 110 of the infrared radiation device 1 has the opening that is in the shape of a rectangle, and the first and second outer peripheral lines 113 and 114 have respective rectangular shapes of different sizes. In the infrared radiation device 1, an area of the opening of the cavity 110 on the back surface of the substrate 11 is larger than that of the opening of the cavity 110 on the (front) surface of the substrate 11. Therefore, in the infrared radiation device 1, the second outer peripheral line 114 is larger than the first outer peripheral line 113. The cavity 110 of the substrate 11 is formed so that the area of the opening becomes gradually larger as it is further apart from the insulation layer 12 in the thickness direction of the substrate 11.

Preferably the heat generating layer 13 is in the shape of an oblong in planar view. The heat generating layer 13 is arranged so that preferably a longitudinal direction thereof agrees with a direction along which the two electrodes 15 are arranged. In planar view, the heat generating layer 13 has a longer length in the longitudinal direction than each length of the sides of the first outer peripheral line 113 in a direction along the longitudinal direction of the heat generating layer 13. In planar view, the heat generating layer 13 has a shorter length in a crosswise direction thereof than each length of the sides of the first outer peripheral line 113 in a direction along the crosswise direction of the heat generating layer 13.

The infrared radiation device 1 is configured so that, in the direction along which the two electrodes 15 are arranged, each of the two coverings 18 of the heat generating layer 13 exists on both inside and outside of the first outer peripheral line 113.

In the infrared radiation device 1, intermediate part, between the two coverings 18, of the heat generating layer 13 is directly formed on the surface of the shape stabilizing layer 14, namely a surface of the thin film. The intermediate part of the heat generating layer 13 is inside the first outer peripheral line 113. In the infrared radiation device 1, a laminated film of each pair of foundation portion 17 and electric conductor 16 is between a corresponding covering 18 and the shape stabilizing layer 14. Accordingly, in the infrared radiation device 1, each pair of foundation portion 17 and electric conductor 16 also exists on both inside and outside of the first outer peripheral line 113. The electric conductors 16 are made of electrically conducting material having a higher melting point than that of the substrate 11. Preferably the foundation portions 17 are made of the same material as that of the heat generating layer 13. Each electric conductor 16 is sandwiched between corresponding foundation portion 17 and covering 18 of the heat generating layer 13 that are made of the same material, whereby the infrared radiation device 1 can reduce respective internal stress of the electric conductors 16. Preferably the foundation portions 17 have the same thickness as those of the coverings 18 of the heat generating layer 13. Each of the foundation portions 17 and the electric conductors 16 is in the shape of an oblong.

Each connector 152 of the infrared radiation device 1 is formed with a connector piece 1521 on a corresponding covering 18 via a corresponding first hole 191 formed in the protective layer 19, and electrically connected with the corresponding covering 18. The infrared radiation device 1 is also formed with the supports 151 of the electrodes 15 on the shape stabilizing layer 14 via respective second holes 192 formed in the protective layer 19. The second holes 192 of the protective layer 19 are outside and away from the second outer peripheral line 114.

The infrared radiation device 1 of the embodiment as explained above includes the substrate 11, the insulation layer 12 provided on the surface of the substrate 11, the heat generating layer 13 provided on the side of the surface of the insulation layer 12, the electrodes 15, the foundation portions 17, and the electric conductors 16. The substrate 11 has the cavity 110 that exposes part of the back surface of the insulation layer 12 that is on an opposite side to the (front) surface of the insulation layer 12. The insulation layer 12 is electrically insulative. Each foundation portion 17 exists on both inside and outside of the vertical projection area of the opening edge, on the surface of the substrate 11, of the cavity 110. The projection direction of the vertical projection area is along the thickness direction of the insulation layer 12. The electric conductors 16 are provided on respective surfaces of the foundation portions 17. Both ends of the heat generating layer 13 are provided as coverings 18 that cover the respective electric conductors 16. The electrodes 15 are in contact with the respective surfaces of the coverings 18 on the outside of the vertical projection area. The electric conductors 16 are formed of electrically conducting material having a higher melting point than those of the electrodes 15 and have a smaller electrical resistance than those of the foundation portions 17 and the heat generating layer 13. The infrared radiation device 1 can therefore suppress an increase in temperature of each electrode 15, thereby suppressing thermal degradation in the electrodes 15.

In the infrared radiation device 1, preferably the heat generating layer 13 is formed of the same material as that of the foundation portions 17, whereby the infrared radiation device 1 can reduce respective internal stress of the electric conductors 16.

In the infrared radiation device 1, preferably, the heat generating layer 13 is made of tantalum nitride, the foundation portions 17 are made of tantalum nitride, the electric conductors 16 are made of tantalum, and the electrodes 15 are made of aluminum. In this case, the infrared radiation device 1 can more reduce an electric current flowing through each covering 18 than an electric current flowing through each electric conductor 16, thereby suppressing heat generation by each covering 18 and heat generation by each electrode 15. The aluminum is not limited to pure aluminum, but may be aluminum alloy containing different metal such as Si, Cu, Ti and Sc.

Preferably the infrared radiation device 1 further includes the shape stabilizing layer 14 that is between the insulation layer 12 and the heat generating layer 13 and stabilizes the shape of the heat generating layer 13. The infrared radiation device 1 can accordingly more stabilize the shape of the heat generating layer 13 and prevent the heat generating layer 13 from being broken. The infrared radiation device 1 can therefore have improved reliability.

In the infrared radiation device 1, preferably the insulation layer 12 has a smaller thermal expansion coefficient than that of the substrate 11, and the shape stabilizing layer 14 has a larger thermal expansion coefficient than that of the substrate 11. The infrared radiation device 1 can accordingly suppress the occurrence of wrinkles in the insulation layer 12, thereby preventing the heat generating layer 13 from being broken.

In the infrared radiation device 1, preferably, the shape stabilizing layer 14 is made of silicon nitride, and the insulation layer 12 is made of silicon oxide. In the infrared radiation device 1, denseness of each of the shape stabilizing layer 14 and the insulation layer 12 can be improved, and denseness between the insulation layer 12 and the shape stabilizing layer 14 can be improved, thereby improving mechanical strength.

In the infrared radiation device 1, preferably the heat generating layer 13 has a smaller thickness than that of the shape stabilizing layer 14. In this case, the heat capacity of the heat generating layer 13 can be reduced, and the infrared radiation device 1 can quickly raise the temperature of the heat generating layer 13 when the heat generating layer 13 is energized.

Preferably the infrared radiation device 1 further includes the protective layer 19 that covers the heat generating layer 13 and the shape stabilizing layer 14. Preferably the substrate 11 is formed of material having higher thermal conductivity than that of the insulation layer 12. Preferably each electrode 15 includes a support 151 that is outside and away from the heat generating layer 13, and a connector 152 that links the support 151 and a corresponding covering 18 together. Preferably the electrodes 15 are configured so that the connectors 152 are electrically connected with the coverings 18 via the first holes 191 formed in the protective layer 19, respectively and so that the supports 151 are formed on the surface of the shape stabilizing layer 14 via the second holes 192 formed in the protective layer 19, respectively. The infrared radiation device 1 can prevent respective stress caused by the electrodes 15 from influencing the heat generating layer 13.

In a preferable aspect, the cavity 110 of the infrared radiation device 1 is a through-hole 111 that is pierced in the substrate 11 in the thickness direction thereof. The infrared radiation device 1 can accordingly raise the temperature of the heat generating layer 13 efficiently.

In a preferable aspect, the cavity 110 of the infrared radiation device 1 is the hole 112 that is formed in the side of the surface of the substrate 11. In the infrared radiation device 1, the mechanical strength of the substrate 11 can be improved.

A production method for the infrared radiation device 1 includes: forming the insulation layer 12 on the side of the surface of the substrate 11; forming the shape stabilizing layer 14 on the surface of the insulation layer 12; forming a first tantalum nitride layer to be formed into the foundation portions 17 on the surface of the shape stabilizing layer 14; forming a tantalum layer to be formed into the electric conductors 16 on the first tantalum nitride layer; forming the foundation portions 17 and the electric conductors 16 by patterning a laminated film of the first tantalum nitride layer and the tantalum layer; forming the second tantalum nitride layer 130 to be formed into the heat generating layer 13 on the side of the surface of the shape stabilizing layer 14; forming the heat generating layer 13 by patterning the second tantalum nitride layer 130; forming the electrodes 15; and forming the cavity 110. With the production method for the infrared radiation device 1, resistivity of the tantalum layer to be formed into the electric conductors 16 can be reduced in comparison with a case where the tantalum layer to be formed into the electric conductors 16 is formed directly on the shape stabilizing layer 14. The heat resistance and the electrical resistance of the electric conductors 16 can be improved and reduced, respectively. It is accordingly possible to provide the infrared radiation device 1 capable of preventing heat degradation of the electrodes 15.

Each figure in explanations of the embodiments is a schematic diagram, and a ratio of size and thickness of each component is not necessarily an actual dimensional ratio. Respective material, numerical values and the like in the embodiments are just preferable examples, and not limited thereto. Appropriate modifications to the present invention can be made without departing from the scope of the claims.

## Claims

1. An infrared radiation device, comprising:
a substrate that is formed with a cavity;
an insulation layer that is electrically insulative and provided on a surface of the substrate, part of a back surface of the insulation layer that is on an opposite side to the surface of the insulation layer being exposed by the cavity;
a heat generating layer provided on a side of a surface of the insulation layer,
an electrode,
a foundation portion that exists on both inside and outside of a vertical projection area of an opening edge, on the surface of the substrate, of the cavity, a projection direction of the vertical projection area being along a thickness direction of the insulation layer; and
an electric conductor that is provided on a surface of the foundation portion, wherein
an end of the heat generating layer is provided as a covering that covers the electric conductor,
the electrode is in contact with a surface of the covering on the outside of the vertical projection area, and
the electric conductor is formed of electrically conducting material having a higher melting point than that of the electrode and has a smaller electrical resistance than those of the foundation portion and the heat generating layer.

2. The infrared radiation device of claim 1, wherein the heat generating layer is formed of the same material as that of the foundation portion.

3. The infrared radiation device of claim 2, wherein
the heat generating layer is made of tantalum nitride,
the foundation portion is made of tantalum nitride,
the electric conductor is made of tantalum, and
the electrode is made of aluminum.

4. An infrared radiation device of any one of claims 1-3, further comprising a shape stabilizing layer that is between the insulation layer and the heat generating layer and stabilizes a shape of the heat generating layer.

5. The infrared radiation device of claim 4, wherein
the insulation layer has a smaller thermal expansion coefficient than that of the substrate, and
the shape stabilizing layer has a larger thermal expansion coefficient than that of the substrate.

6. The infrared radiation device of claim 5, wherein
the shape stabilizing layer is made of silicon nitride, and
the insulation layer is made of silicon oxide.

7. An infrared radiation device of any one of claims 4-6, wherein the heat generating layer has a smaller thickness than that of the shape stabilizing layer.

8. An infrared radiation device of any one of claims 4-7, further comprising a protective layer that covers the heat generating layer and the shape stabilizing layer, wherein
the substrate is formed of material having higher thermal conductivity than that of the insulation layer,
the electrode comprises a support that is outside and away from the heat generating layer, and a connector that links the support and the covering together, and
the electrode is configured so that the connector is electrically connected with the covering via a first hole formed in the protective layer and so that the support is formed on a surface of the shape stabilizing layer via a second hole formed in the protective layer.

9. An infrared radiation device of any one of claims 1-8, wherein the cavity is a through-hole that is pierced in the substrate in a thickness direction thereof.

10. An infrared radiation device of any one of claims 1-8, wherein the cavity is a hole that is formed in a side of the surface of the substrate.

11. A production method for the infrared radiation device of claim 4, comprising:
forming the insulation layer on the side of the surface of the substrate;
forming the shape stabilizing layer on the surface of the insulation layer;
forming a first tantalum nitride layer to be formed into the foundation portion on a surface of the shape stabilizing layer;
forming a tantalum layer to be formed into the electric conductor on the first tantalum nitride layer;
forming the foundation portion and the electric conductor by patterning a laminated film of the first tantalum nitride layer and the tantalum layer;
forming a second tantalum nitride layer to be formed into the heat generating layer on a side of the surface of the shape stabilizing layer;
forming the heat generating layer by patterning the second tantalum nitride layer;
forming the electrode; and
forming the cavity.
